# EUROPEAN PATENT APPLICATION

(11) **EP 1 118 788 A1**
(43) Date of publication of application: **25.07.2001**
(21) Application number: 01300386.8
(22) Date of filing: 17.01.2001
(51) Int. Cl.: F16D 43/21, F16D 7/02

(54) **Torque limiting clutch**

(30) Priority: 18.01.2000 GB 0000998
(71) Applicant: Lucas Industries Limited, West Midlands B90 4LA (GB)
(72) Inventor: Harvey, John Herbert, Perton, Wolverhampton WV6 7SJ (GB)
(74) Representative: Pople, Joanne Selina

(57) **Abstract**

A torque limiting clutch arrangement comprises a rotatable input member (10; 50) for driving an output member through a clutch including a plurality of clutch members (14, 24; 60, 70) which are biased into engagement with one another by means of first and second springs (20, 21; 76, 64) arranged in parallel to apply a compressive load to the clutch members. The clutch arrangement further comprises adjustment means (38; 90) arranged such that, in the event that a braking load is applied to the output member, the adjustment means act against one of the springs to reduce the magnitude of the compressive load applied to the clutch members by said one of the springs, thereby to permit the clutch to slip.

As the first and second springs (20, 21; 76, 64) are arranged in parallel, when the adjustment means reduce the load applied to the clutch members (14, 24; 60, 70) by a first one of the springs, the load applied by the other one of the springs remains substantially constant. The present invention therefore provides the advantage that, when the load applied by the first spring is reduced, there is no loss of clutch control.

## Description

The invention relates to a torque limiting clutch for use with an electromechanical actuator.

Electromechanical actuators commonly require torque limitation to prevent high inertia loads being transmitted into downstream transmission assemblies in the event of system jams or other rapid stops. A simple clutch could be used, but the friction coefficients of the friction plates of simple clutches tend to be non-uniform, thus accurate control of the torque limitation is not possible.

A known torque limiting clutch arrangement comprises a rotatable input shaft, having first and second flanges, and a member which is located between the flanges and is axially moveable with respect to the input shaft. A ball is located between the first flange of the input shaft and the member, the ball engaging ramped surfaces carried by the first flange and the member such that angular movement of the member with respect to the input shaft causes the ball to ride along the ramped surfaces, thereby adjusting the relative axial positions of the input shaft and the member. A slipping clutch, comprising two sets of clutch plates, one set of which is carried by the member and the other set of which is carried by the output shaft, permits rotary motion of the member to be transmitted to the output shaft when the two sets of clutch plates engage. The first set of clutch plates carried by the member are biased away from the first flange into engagement with the other set of clutch plates by means of a first spring. Additionally, the member is biased towards the first flange of the input shaft by means of a second spring.

In use, if a braking force is applied to the output shaft, the torque across the torque limiting clutch is increased and the ball is caused to ride along the ramped surfaces causing the member to move axially with respect to the input shaft. This causes the spring force of the first spring to be reduced and hence reduces the force pushing the first set of clutch plates into engagement with the second sets of clutch plates. Thus, the clutch is able to slip if a braking force is applied to the output shaft.

A disadvantage of this arrangement is that the first spring is always acting to aid disengagement of the balls and, thus, the second spring has to be sized to prevent both ball disengagement and clutch slip.

US 4 545 470 describes an alternative torque limiting clutch arrangement which includes a friction clutch and a ball ramp mechanism. A spring is associated with the friction clutch and ball ramp mechanism to exert a load on the friction clutch and to establish a limiting torque beyond which clutch slip occurs. The arrangement includes a push-rod which, when the limiting torque is exceeded and the ball is caused to move along the ramp, is forced into a seated position causing disengagement of the clutch discs. This arrangement also suffers from the disadvantage that, when the limiting torque is exceeded and the ball is moved along the ramp, a spring force acting on the clutch discs serves to bias the clutch discs back into engagement with one another. As is the case in the aforementioned prior art, the limiting torque of the arrangement may be increased.

US 4 545 470 also describes a torque limiting clutch arrangement which includes a dual ball-ramp mechanism. This arrangement suffers from the disadvantage that, when a predetermined torque limit is exceeded and the balls ride over the ramps, a spring load applied to the clutch plates can be completely offloaded from the clutch. The device therefore has an undesirable degree of sensitivity.

It is an object of the present invention to provide an alternative torque limiting clutch which alleviates the problems of the prior art.

According to the present invention there is provided a torque limiting clutch arrangement comprising a rotatable input member for driving an output member through a clutch including a plurality of clutch members which are biased into engagement with one another by means of first and second springs arranged in parallel so as to apply a compressive load to the clutch members, the clutch arrangement further comprising adjustment means arranged such that, in the event that a braking load is applied to the output member, the adjustment means act against one of the springs to reduce the magnitude of the compressive load applied to the clutch members by said one of the springs, thereby to permit the clutch to slip.

As the first and second springs are arranged in parallel, the invention provides an advantage in that, when the adjustment means reduce the load applied to the clutch members by one of the springs, the load applied by the other spring remains substantially constant. In known arrangements, first and second springs are arranged such that, when the load applied by one of the springs is reduced, the load applied by the other spring is increased such that it acts against slipping of the clutch. In other arrangements, first and second springs are arranged such that, when the load applied by one of the springs is reduced, the load applied by the other spring is also reduced. This leads to loss of control as the clutch begins to slip. The present invention provides the advantage that, when the load applied by one of the springs is reduced, the load applied by the other spring is maintained and, thus, there is no loss of clutch control.

The clutch conveniently comprises a flange member carried by the input member, an abutment member which is axially movable with respect to the flange member, the second spring being arranged to bias the flange member towards the abutment member, the first spring being arranged to act upon the abutment member and the abutment member being arranged to act upon the clutch members to apply a compressive load thereto.

In one embodiment of the invention, one of the clutch members may form part of the abutment member.

Some of the clutch members are conveniently carried by a first member which cooperates through a drive member with a second member cooperating with the output member, the drive member cooperating with the first and second members such that angular movement of the second member relative to the first member causes the drive member to move out of an equilibrium position and causes operation of the adjustment means to alter the magnitude of the compressive load applied to the clutch members.

Preferably, the drive member takes the form of a spherical member which, in the equilibrium position, seats within a recess or groove having an accurately controlled diameter.

Conveniently, the first and second members may be provided with recesses or grooves, the drive member being retained in the equilibrium position within the recess or groove until angular movement of the second member and the first member exceeds a predetermined amount.

The clutch may further include a third member, which cooperates with the second member and the output member such that rotary motion of the flange member is transmitted, via the clutch members, through the first, second and third members to the output member. The second and third members may be separate parts or may be integrally formed.

The adjustment means may include a spherical member which is engageable with a ramped surface defined by the third member such that, when the drive member moves out of the equilibrium position, the spherical member is caused to ride along the ramped surface, adjusting the relative axial position of the flange member so as to reduce the load applied by the first spring to the clutch members.

Conveniently, the spherical member may be seated, in the equilibrium position, within a recess defined by the second and third members.

In one embodiment of the invention, the drive member and the spherical member may be retained within caging means such that movement of the drive member away from the equilibrium position causes movement of the caging means, the spherical member thereby being caused to ride along the ramped surface.

The invention will now be described, by way of example, with reference to the accompanying drawings, in which:
Figure 1 is a plan view of a torque limiting clutch in accordance with an embodiment of the invention;
Figure 2 is an enlarged plan view of a part of the torque limiting clutch shown in Figure 1;
Figure 3 is an enlarged plan view of a ball arrangement forming part of the torque limiting clutch shown in Figures 1 and 2; and
Figure 4 is a plan view of an alternative embodiment of a torque limiting clutch.

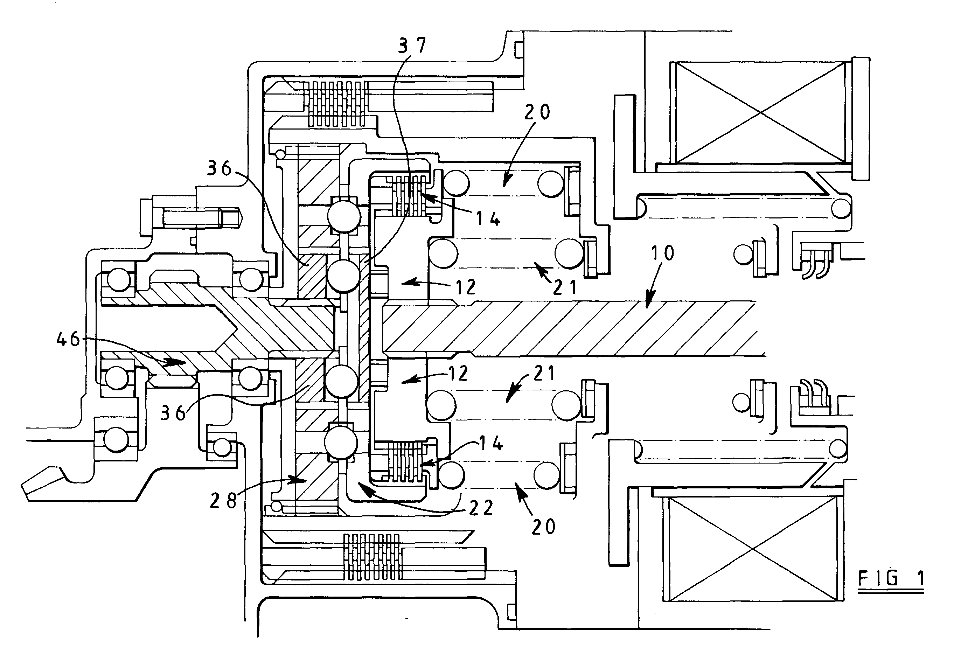

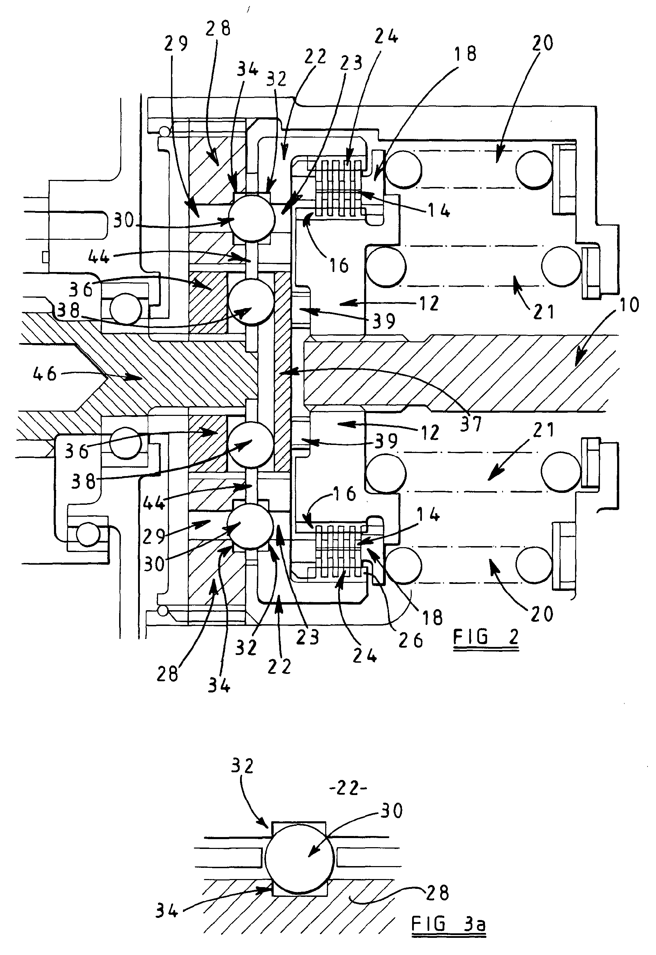

The arrangement illustrated in Figures 1 and 2 includes an input member 10 which is secured to, and is moveable with, a drive shaft (not shown). The input member 10 carries an annular flange member 12 which, in turn, carries a plurality of annular friction or clutch plate members 14. The clutch plates 14 are slidable within grooves 16 provided in the flange member 12 so as to permit limited axial movement between the flange member 12 and the clutch plates 14 but to substantially prevent relative angular movement therebetween. An end one of the clutch plates 14 abuts one side of an associated abutment member 18, the other side of which abuts a first compression spring 20. The flange member 12 is also provided with a second compression spring 21, arranged substantially in parallel with the first spring 20.

The flange member 12 has, associated therewith, a first member 22 which carries a plurality of second, annular, friction or clutch plate members 24, the clutch plates 24 being slidable within grooves 26 provided in the first member 22. The second clutch plates 24 are interleaved with the first clutch plates 14. When the first member 22 occupies a first axial position with respect to the flange member 12, the compression springs 20, 21 serve to bias the first clutch plates 14 into engagement with the second clutch plates 24, at which stage the clutch plates 14, 24 are located at an end of their permitted range of movement, conveniently defined by an abutment carried by the first member 22. Engagement of the first and second clutch plates 14, 24 permits rotary motion of the input member 10 to be transmitted, via the flange member 12 and the engaged clutch plates 14, 24, to the first member 22.

The first member 22 has an associated second member 28. A plurality of spherical drive members 30 are located between the first and second members 22, 28, the spherical drive members 30 being located between recesses or grooves 32, 34 provided in the first and second members 22, 28 respectively, as shown in Figure 3a. The combined force of the first and second springs 20, 21 acts through the clutch plates 14 carried by the first member 22 and serves to retain the drive members 30 in an equilibrium position within the recesses 32, 34. The first and second members 22, 28 are each provided with drillings 23, 29 which define, in part, the recesses 32, 34 and which assist in accommodating the drive members 30.

The second member 28 is secured to an associated third member 36 which is spaced apart, axially, from a further member 37. The further member 37 is axially movable and is secured to an output member 46 which is rotatable about an axis coaxial with that of the input member 10. The further member 37 and the flange member 12 are spaced apart by rollers 39 to permit relative rotation between the further member 37 and the flange member 12.

Spherical members 38 are located between the third member 36 and the further member 37, the third member 36 and the further member 37 being shaped to define ramped surfaces (as illustrated in Figure 3b) with which the spherical members 38 are engageable. Figure 3b shows the location of one of the spherical members 38 with respect to ramped surfaces 40, 42 provided on the third member 36 and the further member 37 respectively. The ramped surfaces provided on the third member 36 and the facing part of the further member 37 are of similar form to the ramped surfaces 40, 42 shown in Figure 3b.

Both the drive members 30 and the spherical members 38 are retained within an associated cage 44 such that, if the drive members 30 move out of their equilibrium position, the associated spherical members 38 are caused to ride along the ramped surface 40, thereby causing axial movement of the further member 37.

When the first and second clutch plates 14, 24 are forced into engagement under the force of the first and second springs 20, 21, rotary motion of the input member 10 is transmitted, via the flange member 12, through the clutch plates 14, 24, through the first member 22, through the drive members 30 to the second and third members 28, 36 and, thus, to the output member 46. Under these circumstances, the drive members 30, housed within the cage 44, occupy an equilibrium position. In use, if a braking force is applied to the output member 46, the torque across the torque limiting clutch is increased. When the torque exceeds a predetermined level determined by the combined force of the springs 20, 21, the second member 28 is able to move angularly relative to the first member 22 causing the drive members 30 to move out of the equilibrium position. As the spherical members 38 are retained within the same cage 44 as the drive members 30, the spherical members 38 therefore ride along the associated ramped surfaces.

When the spherical members 38 ride over their respective ramped surfaces, a force is imparted to the further member 37, thereby causing axial movement of the further member 37 with respect to the first member 22, which is transmitted through the rollers 39 to the flange member 12, countering the action of the spring 21 and reducing the magnitude of the compressive load applied to the clutch plates 14, 24. Thus, the clutch plates 14, 24 are able to disengage, thereby permitting the clutch to slip. The first member 22 will also move by a small amount with respect to the flange member 12.

A further increase in the torque causes the spherical members 38 to ride further along their respective ramped surfaces, thereby further reducing the effect of the second spring 21 until the flange member 12 disengages from the abutment member 18, at which point the compressive load on the clutch plates 14, 24 results only from the action of the first spring 20. The level of slipping is dependent upon the torque across the torque limiting clutch, the torque which is transmitted being dependent on the load exerted by the first spring 20, the coefficient of friction between associated clutch plates 14, 24, and the friction radius of the clutch plates 14, 24.

If the torque across the torque limiting clutch is reduced to less than the predetermined level for slipping to occur, the drive members 30 return towards their equilibrium position and eventually re-locate in their equilibrium positions between the recesses 32, 34. This causes the spherical members 38 to disengage from their ramped surfaces. The load applied by the second spring 21 urges the flange member 12 to the position illustrated in which the combined force of the first and second springs 20, 21 urges the clutch plates 14 into engagement with the second clutch plates 24 carried by the first member 22 to reduce, and subsequently terminate, slipping of the clutch.

The number of clutch plates 14, 24 in each set and the springs 20, 21 are chosen such that the combined spring force of the first and second springs 20, 21 which is applied to each set of clutch plates 14, 24, with the minimum coefficient of friction between the clutch plates, is sufficient to maintain the clutch plates 14, 24 in engagement with one another, thereby preventing slipping of the clutch. In addition, the number of clutch plates in each set and the first and second springs are also chosen such that, when only the spring force due to the first spring 20 is applied to the clutch plates 14, 24, with the maximum coefficient of friction between the first and second sets of clutch plates 14, 24, the torque applied to the clutch plates 14, 24 is less than the desired torque level at which clutch slip is to occur. As the springs are arranged in parallel, the arrangement of the present invention provides the advantage that, when the spherical members 38 are caused to engage their respective ramped surfaces causing a reduction in the force applied by the second spring 21, the load on the first spring 20 is not reduced. Thus, when the predetermined torque level at which clutch slip occurs is exceeded and the clutch plates 14 begin to disengage from the clutch plates 24, the load on the first spring 20 is not increased so as to act against the disengagement. This is not the case in conventional arrangements where unloading of a first spring gives rise to an increased loading of a second spring which serves to act against the unloading of the first spring, thereby acting against the slipping of the clutch.

It will be appreciated that the first and second springs 20, 21 need not be aligned exactly in parallel. Thus, for the purpose of the specification, the phrase "parallel aligned springs" shall be intended to mean that the forces applied by the springs act in approximately the same direction such that an unloading of one spring does not lead to an increased loading of a parallel aligned spring. It will further be appreciated that although the drive members 30 and the spherical members 38 are described as having spherical form, they may also take the form of a cylindrical roller.

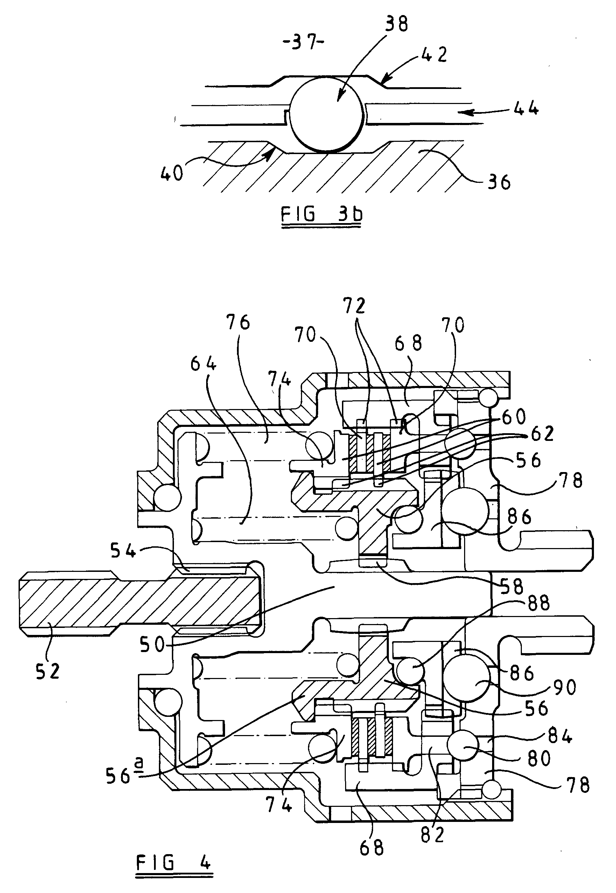

Referring to Figure 4, in an alternative embodiment of the invention the clutch arrangement includes an input member 50 which is secured to, and is movable with, a drive shaft 52, the input member 50 being connected to the drive shaft 52 by means of a spline arrangement 54. The input member 50 is also connected to an annular flange member 56 through a spline arrangement 58. The flange member 56 carries a plurality of annular friction or clutch plates 60, the clutch plates 60 being slidable within grooves 62 provided in the flange member 56 so as to permit limited axial movement between the flange member 56 and the clutch plates 60 but so as to substantially prevent relative angular movement therebetween. An end one of the clutch plates 60 forms part of an abutment member 74 for a first compression spring 76, the other end of the spring 76 being in abutment with a surface of the input member 50. The flange member 56 also has an associated, further compression spring 64, one end of which abuts a surface of the flange member 56 and the other end of which abuts a surface of the input member 50. As described previously with reference to Figures 1 to 3, the first and further springs 76, 64 are arranged in parallel with one another.

The flange member 56 also has an associated first annular member 68, the first member 68 carrying a plurality of second, annular, friction or clutch plates 70. The second clutch plates 70 are slidable within grooves 72 provided in the first member 68 and are interleaved with the first clutch plates 60.

An end region 56a of the flange member 56 engages a surface of the abutment member 74 such that the force due to the first and further springs 76, 64, is applied, through the abutment member 74, to the clutch plates 60,70. When the first member 68 occupies a first axial position with respect to the flange member 56, the compression springs 64, 76 serve to bias the first clutch plates 60 into engagement with the second clutch plates 70, at which stage the clutch plates 60, 70 are located at an end of their permitted range of movement.

The first member 68 has an associated second annular member 78. A first spherical drive member 80 is located between the first and second members 68, 78, the drive member 80 being seated within a pocket or recess having an accurately controlled diameter, the recess being defined, at least in part, by drillings 82, 84 provided in the first and second members 68, 78 respectively.

The arrangement also includes a third annular member 86, a bearing arrangement 88 being located between the third member 86 and the flange member 56. The third member 86 is connected to the first member 82 by means of a spline arrangement which permits axial movement between the first and third members but which prevents any relative angular movement therebetween. A spherical member 90 is located between the second member 78 and the third member 86, the second and third members 78, 86 being shaped to define a recess for the spherical member 90.

The arrangement shown in Figure 4 operates in the same manner as the arrangement shown in Figures 1 to 3 such that, when the first and second clutch plates 60, 70 are forced into engagement under the action of the spring force, rotary motion of the input member 50 is transmitted, via the flange member 56, through the clutch plates 60, 70 to the first and second members 68, 78 and, hence, to an output member (not shown). Under these circumstances, the drive member 80 and the spherical member 90 are seated within their respective recesses in equilibrium positions.

In use, if a braking force is applied to the output member, the torque across the torque limiting clutch is increased. When the torque exceeds a predetermined level, the second member 78 is able to move angularly relative to the first member 68 thereby causing the drive member 80 to move out of its recess. The spherical member 90 has a greater diameter than the drive member 80 and is arranged such that, as soon as the torque exceeds the predetermined level at which the drive member 80 moves out of its recess, the spherical member 90 is caused to move out of its recess so as to impart a force to the third member 86. The third member 86 therefore moves axially relative to the first member 68. Axial movement of the third member 86 is transmitted to the flange member 56 through the bearing arrangement 88 and counters the spring force due to the spring 64 which acts on the flange member 56. The compressive load applied to the clutch plates 60, 70 is therefore reduced and the clutch plates 60, 70 are able to disengage, thereby permitting the clutch to slip. As described previously, as the spherical member 90 moves out of its respective recess to impart a force to the third member 86, thereby reducing the load applied to the clutch members by means of the further spring 64, the load applied by the other, first spring 76 remains substantially constant.

The predetermined torque at which the clutch arrangement will slip is determined by the controlled diameter of the recess within which the drive member 80 seats. As the recess within which the drive member 80 is located has an accurately controlled diameter, the torque at which clutch slip occurs can be accurately controlled.

It will be appreciated that the member 90 need not take the form of a spherical member but may take the form of a cylindrical roller. It will further be appreciated that a different number of clutch plates to those shown in the accompanying drawings may be used.

## Claims

1. A torque limiting clutch arrangement comprising a rotatable input member (10; 50) for driving an output member through a clutch including a plurality of clutch members (14, 24; 60, 70) which are biased into engagement with one another by means of first and second springs (20, 21; 76, 64) arranged in parallel to apply a compressive load to the clutch members, the clutch arrangement further comprising adjustment means (38; 90) arranged such that, in the event that a braking load is applied to the output member, the adjustment means act against one of the springs to reduce the magnitude of the compressive load applied to the clutch members (14, 24; 60, 70) by said one of the springs, thereby to permit the clutch to slip.

2. A torque limiting clutch as claimed in Claim 1, comprising a flange member (12; 56) carried by the input member (10; 50) and an abutment member (18; 74) which is axially movable with respect to the flange member (12), the second spring (21; 64) being arranged to bias the flange member (12; 56) towards the abutment member (18; 74) and the first spring (20; 76) being arranged to act upon the abutment member (18; 74), the abutment member acting upon the clutch members (14, 24; 60, 70) to apply the compressive load thereto.

3. A torque limiting clutch as claimed in Claim 2, wherein one of the clutch members forms part of the abutment member (74).

4. A torque limiting clutch as claimed in any of Claims 1 to 3, wherein at least one of the clutch members is carried by a first member (22; 68) which cooperates through a drive member (30; 80) with a second member (28; 78) which cooperates with the output member, the drive member (30; 80) being arranged to cooperate with the first and second members (22, 68; 28, 78) such that angular movement of the second member (28; 78) relative to the first member (22; 68) causes the drive member (30; 80) to move out of an equilibrium position and causes operation of the adjustment means (38; 90) to alter the magnitude of the compressive load applied to the clutch members (14, 24; 60, 70).

5. A torque limiting clutch as claimed in Claim 4, wherein the drive member (30; 80) takes the form of a spherical member which, in the equilibrium position, seats within a recess or groove (32, 34; 82, 84) having an accurately controlled diameter.

6. A torque limiting clutch as claimed in Claim 4 or Claim 5 wherein each of the first and second members (22, 68; 28, 78) is provided with a respective recess or groove, the drive member (30; 80) being retained within the equilibrium position within the recesses or grooves until relative angular movement between the second member (28; 78) and the first member (22; 68) exceeds a predetermined amount.

7. A torque limiting clutch as claimed in any of Claims 4 to 6, further comprising a third member (36; 86) which cooperates with the second member (28; 78) and the output member such that rotary motion of the flange member (12; 56) is transmitted, via the clutch members (14, 24; 60, 70), through the first, second and third members to the output member.

8. A torque limiting clutch as claimed in Claim 7, wherein the second (28; 78) and third (36; 86) members are integrally formed.

9. A torque limiting clutch as claimed in Claim 7 or Claim 8, wherein the adjustment means include a further spherical member (38; 90) which is engageable with a ramped surface defined by the third member (36; 86) such that, when the drive member (30; 80) moves out of the equilibrium position, the spherical member (38; 90) is caused to ride along the ramped surface, adjusting the relative axial position of the flange member (12; 56) so as to reduce the load applied by one of the springs to the clutch members.

10. A torque limiting clutch as claimed in Claim 9 wherein the further spherical member (38) is seated, in an equilibrium position, within a recess defined by the second (28) and third (36) members.

11. A torque limiting clutch as claimed in Claim 9 or Claim 10, wherein the drive member (30) and the further spherical member (38) are retained within caging means (44) such that movement of the drive member (30) away from the equilibrium position causes movement of the caging means (44), the spherical member (38) thereby being caused to ride along the ramped surface.
